# EUROPEAN PATENT APPLICATION

(11) **EP 4 636 915 A1**
(43) Date of publication of application: **22.10.2025**
(21) Application number: 25168301.7
(22) Date of filing: 03.04.2025
(51) Int. Cl.: H01M 50/167, H01M 10/04, H01M 50/107, H01M 50/152, H01M 50/19, H01M 50/179, H01M 50/342, H01M 50/188

(54) **CYLINDRICAL SECONDARY BATTERY AND A METHOD OF MANUFACTURING SUCH**

(30) Priority: 03.04.2024 KR 20240045193
(71) Applicant: SAMSUNG SDI CO., LTD., Yongin-si, Gyeonggi-do 17084 (KR)
(72) Inventor: YU, GWAN HYEON, 17084 Yongin-si, Gyeonggi-do (KR); JUNG, HYUN KI, 17084 Yongin-si, Gyeonggi-do (KR); PARK, GUN GUE, 17084 Yongin-si, Gyeonggi-do (KR); KO, SUNG GWI, 17084 Yongin-si, Gyeonggi-do (KR); KIM, MYUNG SEOB, 17084 Yongin-si, Gyeonggi-do (KR); YOO, YOON SUN, 17084 Yongin-si, Gyeonggi-do (KR); JUN, WOO TAE, 17084 Yongin-si, Gyeonggi-do (KR); KIM, MUN SUNG, 17084 Yongin-si, Gyeonggi-do (KR); LEE, DONG SUB, 17084 Yongin-si, Gyeonggi-do (KR); CHOI, WOO HYUK, 17084 Yongin-si, Gyeonggi-do (KR); YANG, JUN HO, 17084 Yongin-si, Gyeonggi-do (KR); KWON, JUN HWAN, 17084 Yongin-si, Gyeonggi-do (KR)
(74) Representative: Gulde & Partner

(57) **Abstract**

Disclosed is a cylindrical secondary battery including an electrode assembly, a cylindrical can having a circular upper surface portion and a side portion extending from the upper surface portion, the side portion having a beading portion formed adjacent to an end thereof so as to be inwardly recessed and a crimping portion formed by bending an end of the side portion, the can receiving the electrode assembly, and a cap plate coupled to an open end of the can, the cap plate having a notch formed therein, wherein the rupture pressure of the notch is lower than the uncrimping pressure of the crimping portion. The cylindrical secondary battery may be efficiently designed by designing and controlling factors that affect the rupture pressure and uncrimping, and safety of the cylindrical secondary battery can be improved by performing control such that uncrimping does not occur before rupture of the notch.

## Description

### FIELD

Embodiments of the present disclosure relate to a cylindrical secondary battery and a method of manufacturing such.

### BACKGROUND

Recently, there has been increasing demand for a type of secondary battery configured such that both a positive electrode terminal and a negative electrode terminal are disposed at one side of the secondary battery. This type of secondary battery may have the advantage of a simple electrical connection structure to the outside.

In the cylindrical secondary battery, an electrode assembly may be received in a cylindrical can. The can may be sealed by a cap plate, which may be supported by a beading portion and may be fixed to the can by a crimping portion. A notch may be formed in the cap plate. The notch may serve as a vent configured to rupture and to discharge internal gas if the internal pressure of the cylindrical secondary battery increases.

The information disclosed in this section is provided only for enhancement of understanding of the background of the present disclosure and therefore it may contain information that does not form the prior art.

### SUMMARY

Some embodiments of the present disclosure provide a cylindrical secondary battery that allows precise design of notch rupture pressure and uncrimping pressure. Some embodiments of the present disclosure relate to a cylindrical secondary battery having an improved structure.

A cylindrical secondary battery according to some embodiments of the present disclosure includes an electrode assembly, a cylindrical can having a circular upper surface portion and a side portion extending from the upper surface portion, the side portion having a beading portion formed adjacent to an end thereof so as to be inwardly recessed and a crimping portion formed by bending an end of the side portion, wherein the can may receive the electrode assembly, and a cap plate coupled to an open end of the can, the cap plate having a notch formed therein, wherein the rupture pressure of the notch is lower than the uncrimping pressure of the crimping portion.

The cylindrical secondary battery may further include a gasket inserted between the cap plate and the crimping portion, the gasket insulating the cap plate from the side portion, the gasket being made of an insulating material.

The cap plate may include a flat region disposed between the beading portion and the crimping portion and a vent region formed so as to be stepped from the flat region, the notch being provided in the vent region.

The overlap length by which the crimping portion covers the flat region so as to overlap the cap plate may be less than 3.3 mm.

The can may have a diameter of 46 φ (mm).

The thickness of the crimping portion may be greater than the thickness of the side portion other than the crimping portion.

The crimping portion may have a thickness of 0.5 mm to 0.7 mm.

The material and the thickness of the cap plate may be changed depending on the overlap length and the thickness of the crimping portion.

The diameter of the notch may be changed depending on the overlap length and the thickness of the crimping portion.

A cylindrical secondary battery according to some embodiments of the present disclosure includes an electrode assembly having a first electrode plate and a second electrode plate, a cylindrical can having a circular upper surface portion and a side portion extending from the circular upper surface portion, the side portion having a beading portion formed adjacent to an end thereof so as to be inwardly recessed and a crimping portion formed by bending an end of the side portion, wherein the can may receive the electrode assembly, a positive electrode terminal inserted into the circular upper surface portion in an insulated state, a first current collector plate electrically connected to the first electrode plate and the positive electrode terminal, a second current collector plate electrically connected to the second electrode plate and the side portion, a cap plate coupled to the side portion, the cap plate having a notch formed therein, and a gasket inserted between the side portion and the cap plate, the gasket being made of an insulating material, wherein the rupture pressure of the notch is lower than the uncrimping pressure of the crimping portion.

The cap plate may include a flat region disposed between the beading portion and the crimping portion and may include a vent region formed so as to be stepped from the flat region, the notch being provided in the vent region.

The overlap length by which the crimping portion covers the flat region so as to overlap the cap plate may be less than 3.3 mm.

The can may have a diameter of 46 φ (mm).

The thickness of the crimping portion may be greater than the thickness of the side portion other than the crimping portion.

The crimping portion may have a thickness of 0.5 mm to 0.7 mm.

The material and the thickness of the cap plate may be changed depending on the overlap length and the thickness of the crimping portion.

The diameter of the notch may be changed depending on the overlap length and the thickness of the crimping portion.

A method of manufacturing a cylindrical secondary battery, according to some embodiments, includes: providing an electrode assembly having a first electrode plate and a second electrode plate; providing a cylindrical can having a circular upper surface portion and a side portion extending from the circular upper surface portion, the side portion having a beading portion formed adjacent to an end thereof so as to be inwardly recessed and a crimping portion formed by bending an end of the side portion, wherein the cylindrical can receives the electrode assembly; inserting a positive electrode terminal into the circular upper surface portion in an insulated state; electrically connecting a first current collector plate to the first electrode plate and the positive electrode terminal; electrically connecting a second current collector plate to the second electrode plate and the side portion; coupling a cap plate to the side portion, the cap plate having a notch formed therein; and inserting a gasket between the side portion and the cap plate, the gasket being made of an insulating material, wherein a rupture pressure of the notch is lower than an uncrimping pressure of the crimping portion.

### BRIEF DESCRIPTION OF THE DRAWINGS

FIG. 1 is a perspective view of a cylindrical secondary battery according to some embodiments of the present disclosure;
FIG. 2 is a sectional view of the cylindrical secondary battery shown in FIG. 1;
FIG. 3 is a partial sectional view showing a pressure direction if the internal pressure of the cylindrical secondary battery increases;
FIG. 4 is a view showing the distribution of pressure in a cap plate and a can that are shown in FIG. 3;
FIG. 5 is a view showing the strain of a crimping portion depending on the thickness of the can of the cylindrical secondary battery according to the embodiment depicted in FIG. 3;
FIG. 6 is a view showing displacement depending on the material of the cap plate of the cylindrical secondary battery according to the embodiment depicted in FIG. 3;
FIG. 7 is a view showing displacement depending on the thickness of the cap plate of the cylindrical secondary battery according to the embodiment depicted in FIG. 3; and
FIG. 8 is a view showing the displacement of the cap plate depending on the position of a notch of the cylindrical secondary battery according to the embodiment depicted in FIG. 3.

### DETAILED DESCRIPTION

Embodiments are provided to more fully illustrate the present disclosure to a person having ordinary skill in the art. The following embodiments may be modified in various other forms, and the scope of the present disclosure is not limited to the following embodiments. The embodiments are provided to make the present disclosure more complete and to convey the idea of the present disclosure fully to those skilled in the art.

In the accompanying drawings, the thickness or size of each layer is exaggerated for simplicity and clarity of description and the same reference symbols in the drawings refer to the same elements. As used herein, the term "and/or" includes any one of the enumerated items and any combination of one or more thereof. As used herein, the term "connected" refers not only to direct connection between members A and B but also to indirect connection between members A and B with member C interposed therebetween.

The terms used in the specification are intended to describe specific embodiments and are not intended to limit the present disclosure. As used herein, singular forms may include plural forms, unless the context clearly indicates otherwise. As used herein, the terms "comprise" (or "include") and/or "comprising" (or "including") are intended to specify the presence of stated figures, numbers, steps, operations, members, elements, and/or groups thereof and do not exclude the presence or addition of one or more other figures, numbers, steps, operations, members, elements, and/or groups.

While terms such as first and second are used herein to describe various members, parts, regions, layers, and/or portions, the members, the parts, the regions, the layers, and/or the portions are not to be limited by the terms. The terms are used only to distinguish one member, one part, one region, one layer, or one portion from another member, another part, another region, another layer, or another portion. Thus, a first member, a first part, a first region, a first layer, or a first portion hereinafter described may refer to a second member, a second part, a second region, a second layer, or a second portion without departing from the teachings of the present disclosure.

Terms related to space, such as "beneath," "below," "lower," "above," and "upper," may be utilized to facilitate understanding of one element or feature shown in the drawings as different from another element or feature. The terms related to space are intended to facilitate understanding of the present disclosure in various states of process or use and are not intended to limit the present disclosure. For example, if an element or feature in a figure is inverted, an element or feature described as "beneath" or "below" becomes "above" or "upper." Thus, "beneath" is a concept that encompasses "above" or "below".

Hereinafter, a cylindrical secondary battery according to an embodiment of the present disclosure will be described in detail with reference to the accompanying drawings. First, an exemplary structure of the cylindrical secondary battery will be described.

As described herein, in the cylindrical secondary battery, an electrode assembly may be received in a cylindrical can. The can may be sealed by a cap plate, which may be supported by a beading portion and may be fixed to the can by a crimping portion. A notch may be formed in the cap plate. The notch may serve as a vent configured to rupture and to discharge internal gas if the internal pressure of the cylindrical secondary battery increases.

Consequently, the rupture pressure of the notch may need to be lower than the pressure at which the crimping portion is uncrimped (the crimping portion is opened due to deformation of the cap plate).

However, uncrimping may occur due to deformation of the cap plate before rupture of the notch depending on the amount by which the crimping portion covers the cap plate (usually referred to as the amount of coverage, expressed in length), the thickness of a side surface of the can (a region corresponding to the crimping portion), or the stiffness (material and thickness) of the cap plate. If the thickness, the stiffness, or the amount of coverage of the can is increased unconditionally to solve this problem, the size of the electrode assembly may be decreased and material costs may be increased. Consequently, it is desirable to optimally design the secondary battery while setting the rupture pressure of the notch to be lower than the uncrimping pressure.

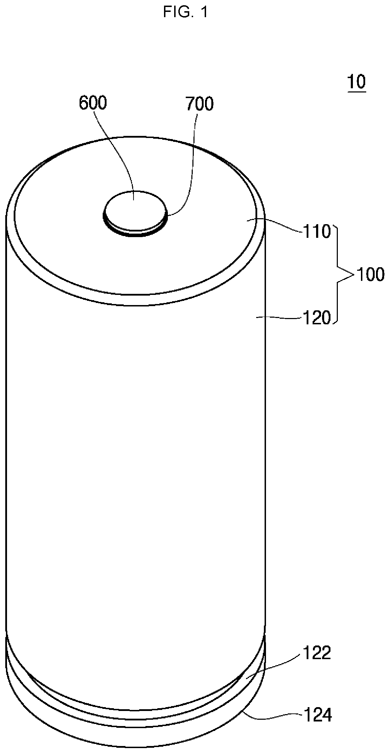

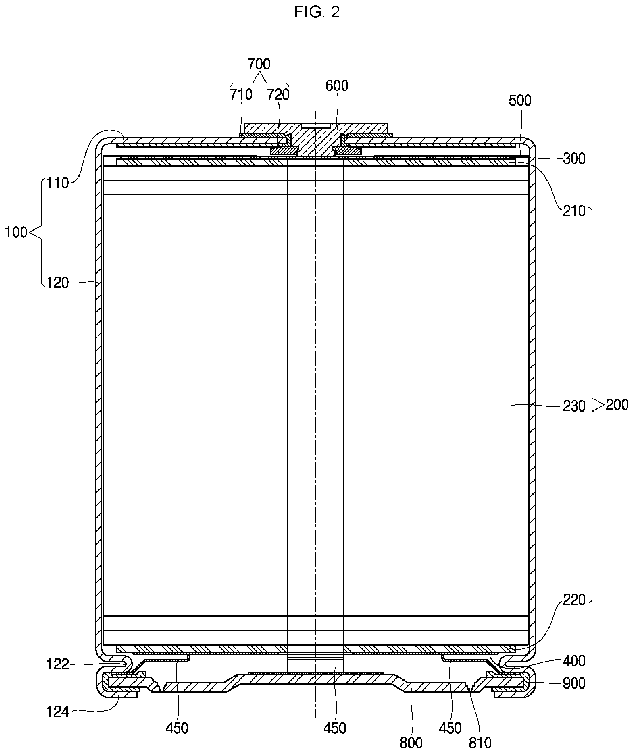

FIG. 1 is a perspective view of a cylindrical secondary battery according to some embodiments of the present disclosure. FIG. 2 is a cross-sectional view of the cylindrical secondary battery shown in FIG. 1.

Referring to FIGs. 1 and 2, the secondary battery 10 according to some embodiments of the present disclosure may include a can 100, an electrode assembly 200, a first current collector plate 300, a second current collector plate 400, a negative electrode lead 450, an insulating member 500, a positive electrode terminal 600, a first gasket 700, a cap plate 800, and a second gasket 900.

Referring to FIGs. 1 and 2, the can 100 may receive/accommodate the electrode assembly 200 and an electrolyte, and may have an approximately cylindrical shape. The can may be made of aluminum (Al) or steel. The can 100 may include a circular upper surface portion 110 and a side portion 120 extending downward from the upper surface portion 110. The positive electrode terminal 600 and the first gasket 700 may be coupled to the upper surface portion 110. The positive electrode terminal may be made of Aluminum (Al). A beading portion 122 and a crimping portion 124 may be formed at the bottom of the side portion 120. While the present embodiment is described with reference to an example in which the bottom of the can 100 is open, the top of the can 100 may be open.

Upon assembling the electrode assembly 200 in the can 100, the can 100 may be disposed such that the upper surface portion 110 faces downward, the electrode assembly 200 may be inserted into the can 100, and the beading portion 122 may be formed at the can 100. The beading portion 122 may prevent separation of the electrode assembly 200 from the can (case) 100. The beading portion 122 may be formed by bending a lower end of the side portion 120 so as to be recessed in an inward direction of the can 100. After forming the beading portion 122, the cap plate 800 and the second gasket 900 may be assembled, and the crimping portion 124 may be formed to prevent separation of the cap plate 800 from the can 100. The crimping portion 124 may be formed by bending an end of the side portion 120 in the inward direction of the can 100.

Referring to FIG. 2, the electrode assembly 200 may include a first electrode plate 210, a second electrode plate 220, and a separator 230.

The first electrode plate 210 may be any one of a negative electrode plate and a positive electrode plate. The depicted embodiment is described with reference to an example in which the first electrode plate 210 is a positive electrode plate. The first electrode plate 210, which is a positive electrode plate, may be made of a highly conductive metal sheet, such as aluminum (Al) foil or mesh. The first electrode plate 210 may be provided with a positive electrode coated portion coated with a positive electrode active material and a positive electrode uncoated portion coated with no positive electrode active material. For example, the positive electrode active material may be made of a chalcogenide compound, e.g., a composite metal oxide such as LiCoO₂, LiMn₂O₄, LiNiO₂, or LiNiMnO₂.

The second electrode plate 220 may be the other of a negative electrode plate and a positive electrode plate. The depicted embodiment is described with reference to an example in which the second electrode plate 220 is a negative electrode plate. The second electrode plate 220, which is a negative electrode plate, may be made of a conductive metal sheet, such as copper (Cu) foil, nickel (Ni) foil, or mesh. The second electrode plate 220 may be provided with a negative electrode coated portion coated with a negative electrode active material and a negative electrode uncoated portion coated with no negative electrode active material. For example, the negative electrode active material may be made of a carbon-based material, silicon (Si), tin (Sn), tin oxide, a tin alloy composite, a transition metal oxide, lithium metal nitride, or a metal oxide.

The separator 230 may be interposed between the first electrode plate 210 and the second electrode plate 220 to prevent short circuit between the first electrode plate 210 and the second electrode plate 220. For example, the separator 230 may be made of polyethylene, polypropylene, or a porous copolymer of polyethylene and polypropylene.

In some examples, in the electrode assembly 200, the uncoated portion of the first electrode plate 210 may be disposed so as to protrude upward above an upper end of the first electrode plate 210. The uncoated portion of the second electrode plate 220 may be disposed so as to protrude downward under a lower end of the second electrode plate 220. The first electrode plate 210 and the second electrode plate 220 may be wound into a jelly-roll shape. In this state, the first current collector plate 300 may be welded to the uncoated portion of the first electrode plate 210, and the second current collector plate 400 may be welded to the uncoated portion of the second electrode plate 220. The first and second current collector plates may be made of Aluminum (Al).

Referring to FIG. 2, the first current collector plate 300 may be disposed between the upper surface portion 110 and the uncoated portion of the first electrode plate 210. The first current collector plate 300 may be welded and electrically connected to the first electrode plate 210, which is a positive electrode plate, and therefore the first current collector plate 300 may be defined as a positive electrode current collector plate. The first current collector plate 300 may be approximately disk-shaped/disc shaped. A central part of the first current collector plate 300 may be electrically connected to the positive electrode terminal 600. However, the first current collector plate 300 may need to be insulated from the can 100. Therefore, the plate-shaped insulating member 500 may be provided between the first current collector plate 300 and the can 100.

Referring to FIG. 2, the second current collector plate 400 may be disposed between the cap plate 800 and the uncoated portion of the second electrode plate 220. The second current collector plate 400 may be welded and electrically connected to the second electrode plate 220, which is a negative electrode, and therefore the second current collector plate 400 may be defined as a negative electrode current collector plate. The second current collector plate 400 may be approximately disk-shaped/disc-shaped. The second current collector plate 400 may be electrically connected to the side portion 120 of the can 100 via a plurality of negative electrode leads 450. Although not shown in the drawings, the second current collector plate 400 may be directly welded and electrically connected to the side portion 120 of the can 100 without the negative electrode leads 450.

Referring to FIG. 2, the negative electrode lead 450 may have a plate shape having a predetermined length and width. The negative electrode lead 450 may be a conductor, which may electrically connect the second current collector plate 400 and the side portion 120 of the can 100 to each other. One end of the negative electrode lead 450 may be electrically connected to the second current collector plate 400, and the other end of the negative electrode lead 450 may be inserted between the beading portion 122 and the second gasket 900 so as to be electrically connected to the side portion 120. In some examples, one end of the negative electrode lead 450 and the second current collector plate 400 may be welded to each other, and the other end of the negative electrode lead 450 may or may not be welded to the side portion 120. Because the negative electrode lead 450 can be fixed without welding by the beading portion 122, the second gasket 900, and the crimping portion 124, welding between the side portion 120 and the negative electrode lead 450 may be advantageously omitted. Because the second current collector plate 400 and the negative electrode lead 450 are electrically connected to each other and the negative electrode lead 450 is electrically connected to the side portion 120, the can 100 may serve as a negative electrode (e.g., may have negative polarity). Consequently, the positive electrode terminal 600 may be installed so as to be insulated from the can 100.

The insulating member 500 may have a hollow disk (disc) shape, and may be made of an insulating material. The bottom of the positive electrode terminal 600 and the first current collector plate 300 may be in contact with and electrically connected to each other through the hollow (e.g., hole) of the insulating member 500. The remaining part of the insulating member 500 excluding the hollow may cover an upper surface of the first current collector plate 300. To this end, the insulating member 500 may be formed so as to be equal (in size) to or larger than the first current collector plate 300.

Referring to FIGs. 1 and 2, the positive electrode terminal 600 may be installed so as to be insulated from the upper surface portion 110 of the can 100 by the first gasket 700. The top (upper portion) of the positive electrode terminal 600 may be exposed to the outside of the upper surface portion 110, and the bottom (lower portion) of the positive electrode terminal 600 may be in contact with and electrically connected to the first current collector plate 300. In some examples, the positive electrode terminal 600 may be a rivet terminal fixed to the upper surface portion 110 from the inside or the outside of the can 100 by riveting, but the invention is not limited thereto.

Referring to FIGs. 1 and 2, the first gasket 700 (made of an insulative material) may insulate the positive electrode terminal 600 and the can 100 from each other. In some non-limiting examples, the first gasket 700 may include an upper gasket 710 configured to insulate the positive electrode terminal 600 and an outer surface of the upper surface portion 110 from each other and a lower gasket 720 configured to insulate the positive electrode terminal 600 and an inner surface of the upper surface portion 110 from each other. In other embodiments, the upper gasket 710 and the lower gasket 720 may be integrally formed. The insulating member 500 may be inserted between the lower gasket 720 and the first current collector plate 300.

Referring to FIG. 2, the cap plate 800 may be an approximately disk-shaped plate, which may be coupled to the side portion 120 via the second gasket 900. The cap plate may be metal. For simplicity, the cap plate 800 may be divided into a flat region disposed between the beading portion 122 and the crimping portion 124 (an edge region of the cap plate) and a vent region formed so as to be stepped from the flat region (the remaining region other than the flat region). The cap plate 800 may be fixed to the can 100 by the beading portion 122 and the crimping portion 124. The flat region may be a part fixed by the beading portion 122 and the crimping portion 124. Because the second gasket 900 (e.g., made of an insulative material) is disposed between the cap plate 800 and the side portion 120 (e.g., the crimping portion), the cap plate 800 may be insulated from the can 100 (e.g., the side portion). Consequently, the cap plate 800 may be neutral (non-polarized), and therefore the cap plate may not have the polarity of a negative electrode or a positive electrode. A plate surface of the cap plate 800 may be provided with a notch 810 for venting gas. The notch 810 may be formed/provided in the vent region.

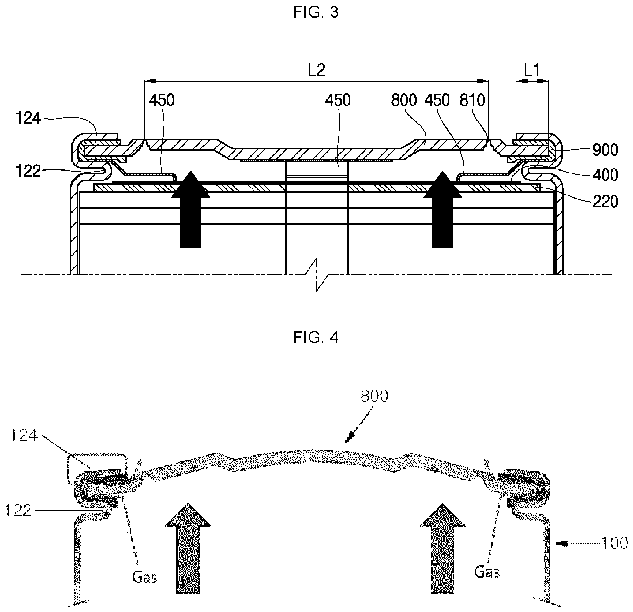

Referring to FIG. 2, the notch 810 may be provided at an inner (a direction toward the electrode assembly) plate surface of the cap plate 800 in the vent region. The notch 810 may be a V-shaped groove in section (cross-section). In plan, the notch 810 may be a circular groove in the cap plate 800. The notch 810 may serve as a safety vent configured to rupture and to allow internal gas to escape from the secondary battery 10 if the pressure in the secondary battery 10 is a predetermined level (e.g., a predetermined or set pressure) or higher. Because the notch 810 is circular in plan, the diameter L2 of the notch 810 may be represented by the length between left and right notch parts of notch 810 (as shown in FIG. 3).

Hereinafter, parameters that affect notch rupture pressure and deformation of the crimping portion and precision design measures to control the parameters will be described.

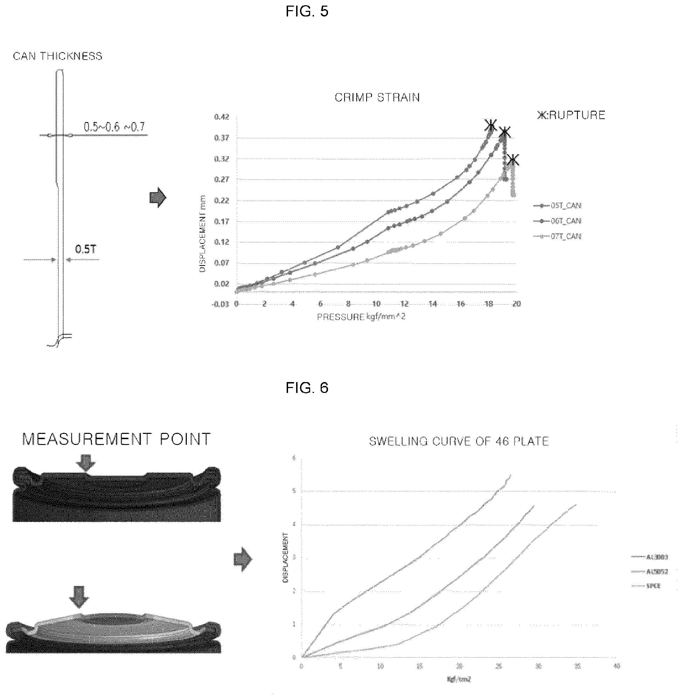

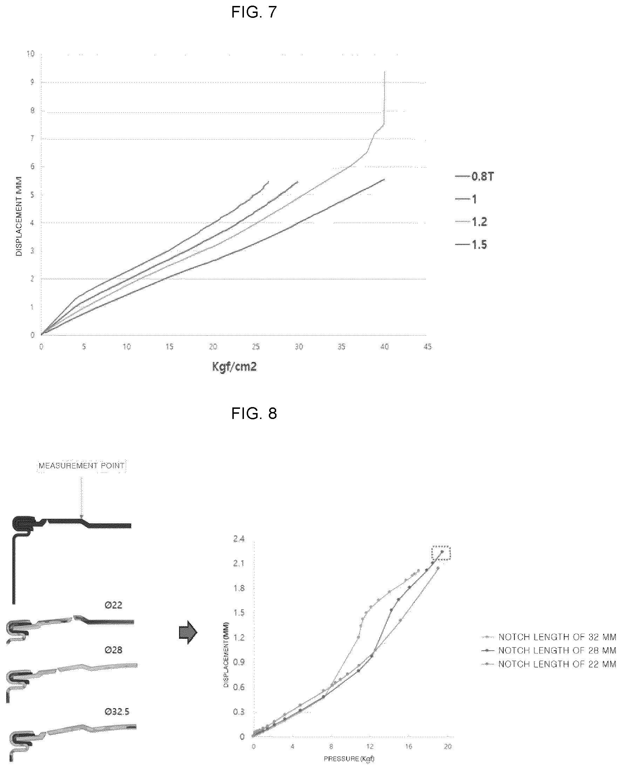

FIG. 3 is a partial sectional view showing a pressure direction if the internal pressure of the cylindrical secondary battery increases. FIG. 4 is a view showing the distribution of pressure in the cap plate and the can shown in FIG. 3. FIG. 5 is a view showing the strain of the crimping portion depending on the thickness of the can of the cylindrical secondary battery according to the depicted embodiment. FIG. 6 is a view showing displacement depending on the material of the cap plate of the cylindrical secondary battery according to the depicted embodiment. FIG. 7 is a view showing displacement depending on the thickness of the cap plate of the cylindrical secondary battery according to the depicted embodiment. FIG. 8 is a view showing the displacement of the cap plate depending on the position of the notch of the cylindrical secondary battery according to the depicted embodiment.

Referring to FIGs. 3 and 4, if the internal pressure of the cylindrical secondary battery 10 increases, pressure may be applied in a direction toward the cap plate 800. An increase in internal pressure may push the cap plate 800 in an upward direction of FIG. 4. Because the cap plate 800 is fixed to the can 100 by the crimping portion 124, the vent area may be deformed more than the flat region described above. If the internal pressure continues to increase, therefore, the notch 810 may rupture.

The crimping portion 124 may also be affected by the internal pressure. FIG. 4 shows that pressure is higher in green, yellow, and red regions in that order than in blue region. Referring to FIG. 4, pressure higher than the internal pressure applied to the cap plate 800 may be applied to the crimping portion 124. Consequently, if the uncrimping (the state in which the crimping portion is opened due to deformation and rising of the cap plate, whereby the cap plate is not fixed) pressure of the crimping portion 124 is less than the rupture pressure of the notch 810, uncrimping may occur prior to rupture of the notch 810. In order to prevent this, the uncrimping pressure may need to be designed and maintained so as to be higher than the rupture pressure of the notch 810.

The parameters that affect the rupture pressure of the notch 810 and the uncrimping pressure of the crimping portion 124 may be broadly divided into the amount by which the crimping portion 124 covers the (flat region of the) cap plate (hereinafter referred to as an overlap length, L1 in FIG. 3), the thickness of the crimping portion 124, and the stiffness of the cap plate 800 based on the material and thickness thereof.

First, the overlap length L1 will be described with reference to FIG. 3.

In an example in which the diameter of the cylindrical secondary battery 10 is 46 φ (mm), an experiment was conducted while varying the overlap length L1 from 1.8 to 3.6 mm in the state in which the thickness of the crimping portion 124 of the can 100 was 0.5 mm, the thickness of the cap plate 800 was 1.0 mm, the material of the cap plate 800 was AL5052, and the diameter L2 (FIG. 3) of the notch 810 was 28 φ. Under these conditions, the rupture pressure of the notch 810 was 20 kgf. The results of the experiment show that, if the same internal pressure is applied and the overlap length L1 is 3.3 mm or more, uncrimping of the crimping portion 124 starts and the cap plate 800 is deformed. If the overlap length L1 is 3.3 mm, the uncrimping pressure is 20 kgf or more. It can be seen that, without wishing to be bound by any particular theory, if the overlap length L1 is 3.6 mm or more, which exceeds the length of the beading portion 122 (in a diametric direction of the cap plate), uncrimping and deformation of the cap plate 800 are accelerated such as due to the departure of a force point. Consequently, it can be seen that uncrimping pressure may need to be greater than the rupture pressure of the notch 810, and therefore the overlap length L1 of the crimping portion 124 may need to be set to less than 3.3 mm.

Next, the thickness of the crimping portion 124 will be described.

FIG. 5 shows the results of an experiment conducted while varying the thickness of the crimping portion 124 in the state in which the thickness of the cap plate 800 is 1.0 mm, the material of the cap plate 800 is AL5052, and the diameter L2 (FIG. 3) of the notch 810 is 28 φ in an example in which the diameter of the cylindrical secondary battery 10 is 46 φ. If the thickness of the crimping portion 124 is varied from 0.5 to 0.7 mm (the graph corresponds to 0.5 mm, 0.6 mm, and 0.7 mm thickness, respectively, starting from the top to the bottom), the amount of deformation (displacement) of the crimping portion 124 due to an increase in internal pressure decreases as the thickness of the crimping portion 124 increases. It can be seen that uncrimping pressure increases as the thickness of the crimping portion 124 increases. Consequently, a larger thickness of the crimping portion 124 may be advantageous for preventing the occurrence of uncrimping. However, as the thickness of the crimping portion 124 increases, the height of the cylindrical secondary battery 10 may increase, and higher pressure may be required to form the crimping portion 124, which may deform the cap plate 800 during manufacture. Consequently, the inventors have appreciated that it can be important to set an appropriate thickness of the crimping portion 124. In the previous example, the thickness of the crimping portion 124 may be greater than the thickness of the side portion 120 excluding (other than) the crimping portion 124 and may be 0.7 mm or less.

Next, the stiffness of the cap plate 800 will be described.

FIG. 6 shows the results of an experiment conducted while varying the material of the cap plate 800 in the state in which the thickness of the crimping portion 124 is 0.5 mm, the thickness of the cap plate 800 is 0.8 T (mm), and the diameter L2 (FIG. 3) of the notch 810 is 28 φ in an example in which the diameter of the cylindrical secondary battery 10 is 46 φ. Measurement of the deformation of the cap plate 800 with increasing internal pressure was performed at a measurement point shown in FIG. 6. The amount of deformation (swelling curve) of the cap plate 800 was plotted as displacement based on the magnitude of the internal pressure (e.g., in kgf/cm²). The amount of deformation depending on the material was AL3003>AL5052>SPCE. Each of AL3003 and AL5052 is a type of aluminum material, and SPCE (Steel Plate Cold Commercial) refers to a cold-rolled steel plate (rolled steel). It can be seen that, if the material of the cap plate 800 is rigid, the amount of deformation decreases. The inventors have recognized that because the rupture pressure of the notch 810 may need to be lower than the uncrimping pressure of the crimping portion 124, the material of the cap plate 800 can be selected in consideration of the uncrimping pressure. Consequently, the material of the cap plate 800 may be changed depending on the overlap length L1 of the crimping portion 124 and the thickness of the crimping portion 124, which are parameters that affect the uncrimping pressure. The selected material of the cap plate may depend on the overlap length and thickness of the crimping portion.

FIG. 7 shows the results of an experiment conducted while varying the thickness of the cap plate 800 in the state in which the thickness of the crimping portion 124 is 0.5 mm, the material of the cap plate 800 is AL3003, and the diameter L2 (FIG. 2) of the notch 810 is 28 φ in an example of the same cylindrical secondary battery 10 as in FIG. 6. The deformation measurement position of the cap plate 800 with increasing internal pressure is the same as in FIG. 6. The amount of deformation (swelling curve) of the cap plate 800 was plotted as displacement based on the magnitude of the internal pressure. It can be seen that as the thickness of the cap plate 800 increases (from 0.8 mm to 1.5 mm), the amount of deformation of the cap plate 800 decreases. The inventors have recognized that because the rupture pressure of the notch 810 may need to be lower than the uncrimping pressure of the crimping portion 124, the thickness of the cap plate 800 can be selected in consideration of the uncrimping pressure. Consequently, the thickness of the cap plate 800 may also be changed depending on the overlap length L1 of the crimping portion 124 and the thickness of the crimping portion 124. The selected thickness of the cap plate may depend on the overlap length and thickness of the crimping portion.

As described above, the material and thickness of the cap plate 800, which are factors that determine the stiffness of the cap plate 800, may be selected such that the rupture pressure of the notch 810 may be lower than the uncrimping pressure.

Next, the diameter L2 (FIG. 3) of the notch 810 will be described.

FIG. 8 shows the results of an experiment conducted while varying the diameter L2 (FIG. 3, denoted as the length of the notch in FIG. 8) of the notch 810) in the state in which the thickness of the crimping portion 124 is 0.5 mm, the thickness of the cap plate 800 is 1.0 mm, the material of the cap plate 800 is AL5052, and the overlap length L1 of the can 100 is 3.3 mm in an example in which the diameter of the cylindrical secondary battery 10 is 46 φ. Measurement of the deformation of the cap plate 800 with increasing internal pressure was performed at a measurement point shown in the figure. The amount of deformation (swelling curve) of the cap plate 800 was plotted as displacement based on the magnitude of the internal pressure.

It can be seen from FIG. 8 that the slope of the displacement of the cap plate 800 with increasing internal pressure decreases with a smaller diameter of the notch 810. As the diameter of the notch 810 becomes smaller (from 32.5 mm to 22 mm), the notch 810 becomes closer to the center of the cap plate 800. Consequently, even a small amount of deformation of the cap plate 800 may cause the notch 810 to rupture. As the diameter of the notch 810 increases, the notch 810 moves away from the center of the cap plate 800. Consequently, the notch 810 may rupture only if the amount of deformation of the cap plate 800, under the condition that the diameter of the notch 810 is larger, is greater than the amount of deformation of the cap plate 800 under the condition that the diameter of the notch 810 is smaller. It can be seen that the smaller the diameter of the notch 810, the lower the rupture pressure may be. The diameter of the notch 810 may be selected such that the notch has a rupture pressure lower than the uncrimping pressure of the crimping portion 124. For a non-limiting example, if the uncrimping pressure is 20 kgf or higher, a rupture pressure of 20 kgf of the notch 810 may be obtained under the condition that the diameter L2 of the notch 810 in FIG. 8 is 28 φ. This diameter of the notch may depend on the overlap length and a thickness of the crimping portion.

As described above, the cylindrical secondary battery may be efficiently designed by precisely designing and controlling various factors that affect the rupture pressure of the notch and the uncrimping pressure of the crimping portion. Safety of the cylindrical secondary battery may be improved by performing control such that uncrimping does not occur before rupture of the notch.

As is apparent from the above description, according to embodiments of the present disclosure, it is possible to efficiently design a cylindrical secondary battery by precisely designing and controlling factors that affect the rupture pressure of a notch and uncrimping.

It is possible to perform control such that uncrimping does not occur before rupture of the notch, whereby safety of the cylindrical secondary battery may be improved.

According to some embodiments, there is provided a method of manufacturing a cylindrical secondary battery, including: providing an electrode assembly having a first electrode plate and a second electrode plate; providing a cylindrical can having a circular upper surface portion and a side portion extending from the circular upper surface portion, the side portion having a beading portion formed adjacent to an end thereof so as to be inwardly recessed and a crimping portion formed by bending an end of the side portion, wherein the cylindrical can receives the electrode assembly; inserting a positive electrode terminal into the circular upper surface portion in an insulated state; electrically connecting a first current collector plate to the first electrode plate and the positive electrode terminal; electrically connecting a second current collector plate to the second electrode plate and the side portion; coupling a cap plate to the side portion, the cap plate having a notch formed therein; and inserting a gasket between the side portion and the cap plate, the gasket being made of an insulating material, wherein a rupture pressure of the notch is lower than an uncrimping pressure of the crimping portion.

The above are only exemplary embodiments for implementing the present disclosure. The present disclosure is not limited to the above embodiments, and a person having ordinary skill in the art to which the present disclosure pertains will recognize the technical spirit of the present disclosure to the extent that various modifications can be made without departing from the gist of the present disclosure as claimed in the following claims.

## Claims

1. A cylindrical secondary battery (10) comprising:
an electrode assembly (200);
a cylindrical can (100) having a circular upper surface portion (110) and a side portion (120) extending from the circular upper surface portion (110), the side portion (120) having a beading portion (122) formed adjacent to an end thereof so as to be inwardly recessed and a crimping portion (124) formed by bending an end of the side portion (120), wherein the cylindrical can (100) receives the electrode assembly (200); and
a cap plate (800) coupled to an open end of the can (100), the cap plate (800) having a notch (810)formed therein,
wherein a rupture pressure of the notch (810) is lower than an uncrimping pressure of the crimping portion (124).

2. The cylindrical secondary battery (10) as claimed in claim 1, further comprising a gasket inserted between the cap plate (800) and the crimping portion (124), the gasket insulating the cap plate (800) from the side portion (120), and the gasket being made of an insulating material.

3. The cylindrical secondary battery (10) as claimed in claim 1 or 2, wherein the cap plate (800) comprises a flat region disposed between the beading portion (122) and the crimping portion (124) and a vent region formed so as to be stepped from the flat region, the notch (810) being provided in the vent region.

4. The cylindrical secondary battery (10) as claimed in claim 3, wherein an overlap length (L1) by which the crimping portion (124) covers the flat region so as to overlap the cap plate (800) is less than 3.3 mm.

5. The cylindrical secondary battery (10) as claimed in claims 1 to 4, wherein the cylindrical can (100) has a diameter of 46 mm.

6. The cylindrical secondary battery (10) as claimed in claims 1 to 5, wherein a thickness of the crimping portion (124) is greater than a thickness of the side portion (120) other than the crimping portion (124) and/or wherein the crimping portion (124) has a thickness of 0.5 mm to 0.7 mm.

7. The cylindrical secondary battery (10) as claimed in claims 1 to 5, wherein a material and a thickness of the cap plate (800) and/or a diameter (L2) of the notch (810) depends on the overlap length (L1) and a thickness of the crimping portion (124).

8. A cylindrical secondary battery (10) comprising:
an electrode assembly (200) having a first electrode plate (210) and a second electrode plate (220);
a cylindrical can (100) having a circular upper surface portion (110) and a side portion (120) extending from the circular upper surface portion (110), the side portion (120) having a beading portion (122) formed adjacent to an end thereof so as to be inwardly recessed and a crimping portion (124) formed by bending an end of the side portion (120), wherein the cylindrical can (100) receives the electrode assembly (200);
a positive electrode terminal (600) inserted into the circular upper surface portion (110) in an insulated state;
a first current collector plate (300) electrically connected to the first electrode plate (210) and the positive electrode terminal (600);
a second current collector plate (400) electrically connected to the second electrode plate (220) and the side portion (120);
a cap plate (800) coupled to the side portion (120), the cap plate (800) having a notch (810) formed therein; and
a gasket inserted between the side portion (120) and the cap plate (800), the gasket being made of an insulating material,
wherein a rupture pressure of the notch (810) is lower than an uncrimping pressure of the crimping portion (124).

9. The cylindrical secondary battery (10) as claimed in claim 8, wherein the cap plate (800) comprises a flat region disposed between the beading portion (122) and the crimping portion (124) and comprises a vent region formed so as to be stepped from the flat region, the notch (810) being provided in the vent region.

10. The cylindrical secondary battery (10) as claimed in claim 9, wherein an overlap length (L1) by which the crimping portion (124) covers the flat region so as to overlap the cap plate (800) is less than 3.3 mm.

11. The cylindrical secondary battery (10) as claimed in claims 8 to 10, wherein the cylindrical can (100) has a diameter of 46 mm.

12. The cylindrical secondary battery (10) as claimed in claims 8 to 11, wherein a thickness of the crimping portion (124) is greater than a thickness of the side portion (120) other than the crimping portion (124) and/or wherein the crimping portion (124) has a thickness of 0.5 mm to 0.7 mm.

13. The cylindrical secondary battery (10) as claimed in claim 10 or 11, wherein a material and a thickness of the cap plate (800) depend on the overlap length (L1) and a thickness of the crimping portion (124).

14. The cylindrical secondary battery (10) as claimed in claims 10 to 13, wherein a diameter (L2) of the notch (810) depends on the overlap length (L1) and a thickness of the crimping portion (124).

15. A method of manufacturing a cylindrical secondary battery (10), comprising:
providing an electrode assembly (200) having a first electrode plate (210) and a second electrode plate (220);
providing a cylindrical can (100) having a circular upper surface portion (110) and a side portion (120) extending from the circular upper surface portion (110), the side portion (120) having a beading portion (122) formed adjacent to an end thereof so as to be inwardly recessed and a crimping portion (124) formed by bending an end of the side portion (120), wherein the cylindrical can (100) receives the electrode assembly (200);
inserting a positive electrode terminal (600) into the circular upper surface portion (110) in an insulated state;
electrically connecting a first current collector plate (300) to the first electrode plate (210) and the positive electrode terminal (600);
electrically connecting a second current collector plate (400) to the second electrode plate (220) and the side portion (120);
coupling a cap plate (800) to the side portion (120), the cap plate (800) having a notch (810) formed therein; and
inserting a gasket between the side portion (120) and the cap plate (800), the gasket being made of an insulating material,
wherein a rupture pressure of the notch (810) is lower than an uncrimping pressure of the crimping portion (124).
